# EUROPEAN PATENT SPECIFICATION

(11) **EP 4 298 882 B1**
(45) Date of publication and mention of the grant of the patent: **28.05.2025**
(21) Application number: 22181329.8
(22) Date of filing: 27.06.2022
(51) Int. Cl.: A01C 9/04

(54) **PLANTER FOR PLANTING SEEDLINGS AND METHOD FOR CONTROLLING THE OPERATION OF SUCH A PLANTER**
PFLANZMASCHINE ZUM PFLANZEN VON SETZLINGEN UND VERFAHREN ZUR STEUERUNG DES BETRIEBS EINER SOLCHEN PFLANZMASCHINE
DISPOSITIF DE PLANTATION POUR PLANTER DES SEMIS ET PROCÉDÉ POUR COMMANDER LE FONCTIONNEMENT D'UN TEL DISPOSITIF DE PLANTATION

(43) Date of publication of application: 03.01.2024
(73) Proprietor: Dewulf B.V., 8331 XA Winsum (NL)
(72) Inventor: VAN ISEGHEM, Joeri, 8770 INGELMUNSTER (BE); MEINDERTSMA, Siebe, 9172 NZ FERWERD (NL)
(74) Representative: Hostens, Veerle

(56) References cited:
- DE-A1- 1 582 107
- DE-B4- 102014 003 445
- US-A1- 2015 101 517
- US-A1- 2018 098 488

## Description

The invention relates to a planter for planting seedlings, such as potatoes or other tuberous or bulbous plants, comprising:
- a bunker for keeping seedlings to be planted;
- a planting element for planting these seedlings;
- one or more feed devices for feeding the seedlings from the bunker to the planting element;
- a feed opening allowing a quantity of seedlings to pass from the bunker towards the planting element; and
- at least one feed sensor for recording at least one feeding parameter of the feed of seedlings.

The invention also relates to a method for controlling the operation of such a planter.

Planters for planting seedlings are described in DE 10 2014 003 445 B4, US 2015/101517 A1, US 2018/098488 A1 and DE 15 82 107 A1.

Such a planter is usually attached to or towed behind the rear of a tractor. Alternatively, it can also be self-propelled. It comprises furrow openers for forming furrows in the ground. Seedlings are fed from the bunker to at least one said planting element. The seedlings are singulated and the planting element distributes the singulated seedlings at a desired planting distance in the furrow. Such planting element can be a cup elevator or a belt bed, etc. The furrow is thereafter filled with soil and seedlings are covered.

It however happens that misses occur, with no seedlings being planted at certain times, where it was intended to be. This may mean that the bunker is empty or that there is a blockage before or behind the feed opening. When this is noticed, the feed opening can typically be adjusted manually, to reduce it. Sometimes two or more seedlings, called doubles, are planted at the same time, where only one, singulated, seedling should be planted. This typically indicates that too many seedlings pass the feed opening at a time. When this is noticed, the feed opening can typically be adjusted manually, to enlarge it.

In order to detect such misses or doubles, a cup planter for planting potatoes typically comprises a sensor detecting the amount of potatoes in a cup of the cup planter.

In practice, it is however no easy task to adjust the feed opening properly.

The planter from DE 10 2014 003 445 B4 is provided with a sensor assembly for detection of potatoes on a conveyor, generating a control signal, usable for the conveying and laying process.

The planter from US 2015/0101517 A1 comprises a seed bowl sensor and readings of this sensor are used to control the operation of the feed chain of the hopper, so that seeds are dispensed from the hopper when the depth of seed in the seed bowl drops below a specified height, and dispensing is halted when the depth of seed in the seed bowl reaches another higher level.

In US 2018/0098488 A1 a control signal is used to control a belt feeder under the bunker.

DE 1 5682 107 A1 suggests a solution without the requirement of a sensor, by means of an elastic flap controlling the opening.

The object of the invention is to provide a planter and a related method with which the adjusting of the feed opening can be simplified.

The object of the invention is achieved by providing a planter, for planting seedlings, such as potatoes or other tuberous or bulbous plants, comprising:
- a bunker for keeping seedlings to be planted;
- a planting element for planting these seedlings;
- one or more feed devices for feeding the seedlings from the bunker to the planting element;
- a feed opening allowing a quantity of seedlings to pass from the bunker towards the planting element;
- at least one feed sensor for recording at least one feed parameter of the feed of seedlings;
- an evaluation device, adjusted for generating a feed opening adjusting signal based on a data set of the recorded feed parameter, for adjusting the feed opening for adjusting the quantity of seedlings allowed to pass;
- one or more delimiters, delimiting the feed opening; and
- an actuator for adjusting the position of the one or more delimiters based on the feed opening adjusting signal, for adjusting the feed opening.

Such planter comprises one or more delimiters, delimiting the feed opening.

Such delimiter can be provided adjustably above or below or to the side of the feed opening. A combination of such delimiters can be provided. Several such delimiters may be positioned side by side, possibly with space between them.

A delimiter above or to the side of the feed opening can e.g. be made in the form of a slide, that can be plate-shaped for example. A delimiter below the feed opening may be, for example, a height-adjustable bottom plate or a height-adjustable conveyor belt.

At least one actuator is provided for adjusting the position of the one or more delimiters based on the feed opening adjusting signal, for adjusting the feed opening.

The planter preferably further comprises a control unit, adapted to control the actuator based on the feed opening adjusting signal.

The control unit may be provided to receive the feed opening adjusting signal directly from the evaluation device, and to use it to control the planter directly, so that the planter is self-regulating in this way.

On sloping terrain, driving uphill, there is a greater chance that fewer seedlings will be supplied. Adjusting the feed opening automatically using such evaluation device and control unit, solves this problem. An additional inclination sensor may be used to help recognise this situation, but this is not necessary.

Additionally or alternatively, it is also possible to show the feed opening adjusting signal on a monitor to the driver of the planter, who can decide to overrule an instruction to the control unit sent by the evaluation device, or can decide whether or not to send the feed opening adjusting signal to the control unit to control the planter or can decide to manually adjust the feed opening, etc.

There are various ways to realise a said evaluation device and a said control unit. They can be part of a central control unit, similar to central control units known in existing planters, or their operation can be divided over several local control units, possibly supplemented by a central control unit, similar to control devices already known in existing planters.

In a specific embodiment, the planter is a cup planter.

The feed sensor can then more specifically be provided as a quantity sensor for recording a quantity parameter of the amount of seedlings in a cup of the cup planter as said feed parameter. Such quantity sensor can be provided to detect misses or doubles or both.

In an alternative embodiment, the planter is a belt planter.

In such a planter, there is typically an intermediate belt between the bunker and the string bed, with which the feed of potatoes is controlled. Instead of such an intermediate belt or additionally, a slide can e.g. be provided at the exit of the bunker, as a delimiter which delimits a feed opening below this slide and which can be adjusted to control the feed of potatoes.

Both in a cup planter and in a belt planter, the feed sensor can more specifically be provided as a volume sensor, for measuring a volume parameter of the volume of seedlings fed from the bunker towards the planting element as said feed parameter.

In a preferred embodiment, seen in a feeding direction wherein seedlings are fed from the bunker to the planting element, the feed sensor is positioned behind the feed opening. Even more preferably, the feed sensor is positioned before the planting element to be able to respond as accurately as possible to changes in the feed of seedlings.

A planter according to the invention can also be provided both with a said quantity sensor and with a said volume sensor, which are then preferably provided at different locations in the planter. It is also possible to provide the planter with several volume sensors and/or with several quantity sensors.

In a specific embodiment, the planter comprises a vibration device and the evaluation device is adjusted for generating a vibration setting parameter, based on the data set of the feed parameter for adjusting the vibration device.

In a first embodiment, this vibration device can be provided for moving a moving floor of the bunker, e.g. faster forwards or backwards and possibly over a larger distance forwards or backwards or vibrating the moving floor faster upwards and downwards and possibly over a larger distance upwards or downwards.

When the planter is a cup planter, in a second embodiment, this vibration device can be provided for vibrating the cups of this cup planter in the ascending part.

The object of the invention is also achieved by providing a method for controlling the operation of a planter according to the invention as described above, wherein seedlings are fed from a bunker to a planting element, thereby passing a feed opening and at least one feeding parameter of the feed of seedlings is recorded by the at least one feed sensor and wherein the evaluation device generates a feed opening adjusting signal based on a data set of the recorded feeding parameter, for adjusting the feed opening for adjusting the quantity of seedlings allowed to pass from the bunker towards the planting element.

The present invention will now be explained in more detail by means of the following detailed description of a method and a planter according to the present invention. The sole aim of this description is to give explanatory examples and to indicate further advantages and particulars of the present invention, and can thus by no means be interpreted as a limitation of the area of application of the invention or of the patent rights defined in the claims.

In this detailed description, reference numerals are used to refer to the attached drawings, in which:

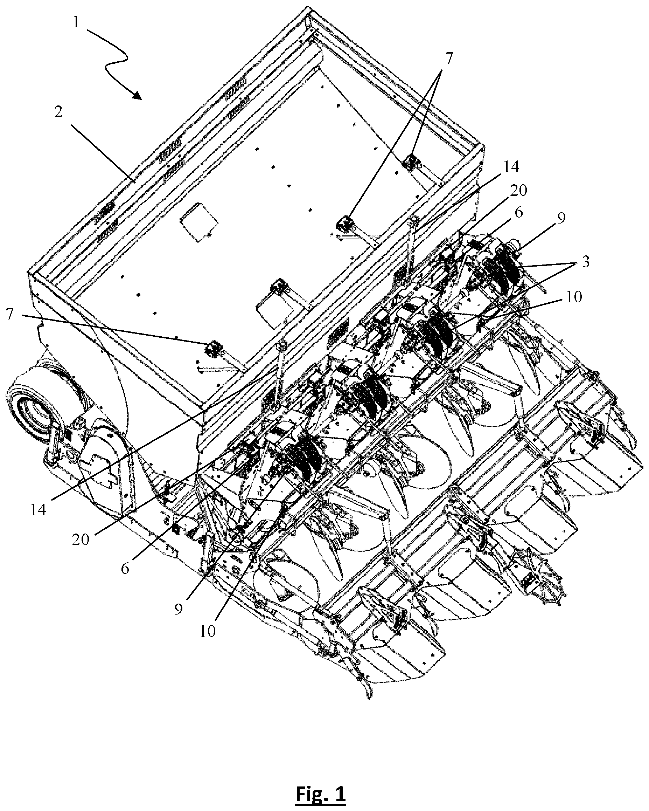

- Fig. 1 shows an embodiment of a potato planter according to the invention in perspective view;
- Fig. 2 schematically shows with part of the potato planter of fig. 1 with the bunker, feed device and a planting element, how this planter can be controlled with a method according to the invention;

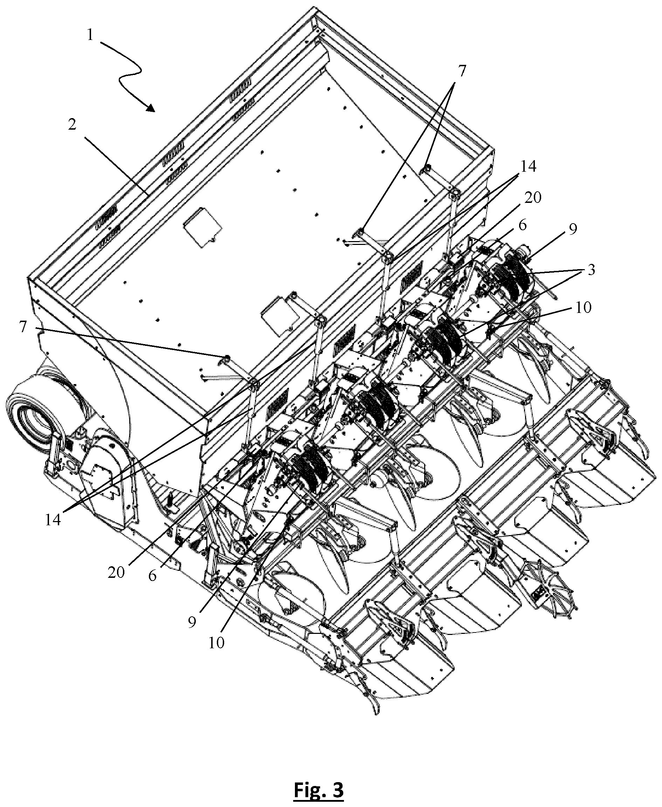

- Fig. 3 shows an alternative embodiment of a potato planter according to the invention in perspective view;
- Fig. 4 schematically shows with part of the potato planter of fig. 3 with the bunker, feed device and a planting element, how this planter can be controlled with a method according to the invention;

The illustrated planters (1) are potato planters. Other planters with analogue singulation and planting of seedlings, such as planters for tulip bulbs or onions or garlic can be worked out analogously.

The illustrated planters (1) all comprise a drawbar for connecting this planter (1) to a tractor. Alternatively, a planter (1) according to this invention could be worked out as a self-propelled planter or could be lifted by a tractor.

Each planter (1) comprises a bunker (2) for keeping potatoes to be planted. In order to plant potatoes, this bunker (2) is filled with potatoes to be planted.

Conveyors (4) are provided as feed devices (4) in the planter (1) to feed the potatoes to be planted in a feed direction from the bunker (2) to one or more planting elements (3) of the planter (1). Alternatively or additionally such feed devices could e.g. comprise an inclined plate and/or a moving floor, etc.

The general structure and working of such planters (1) is known.

In the embodiments as illustrated, the planter (1) is a cup planter and comprises four cup elevators as said planting elements (3). Analogously, cup planters with more or less cup elevators can be worked out.

Further alternative embodiments can be belt planters comprising one or more string beds as said planting elements (3).

The potatoes are fed by a conveyor (4) through a feed opening (5) allowing a quantity of potatoes to pass from the bunker (2) to the planting element (3). In the illustrated embodiments, the feed opening (5) is delimited at the bottom by this conveyor (4) and at the top by a delimiter (13) which is provided as a height-adjustable and plate-shaped slide (13).

In alternative embodiments, the top side of the feed opening (5) could be fixed and the height of the conveyor (4) could be adjustable, such that the conveyor (4) is provided as an adjustable delimiter of the feed opening (5). In further alternative embodiments, adjustable delimiters could be provided at the side of the feed opening (5). A combination of such delimiters can be provided. Several such delimiters may be positioned side by side, possibly with space between them.

The illustrated planters (1) comprise several feed sensors (6, 7, 8, 9, 10, 20) for recording feed parameter (16, 17) of the feed of potatoes:
- several volume sensors (6, 7) are provided for measuring a volume parameter (16) of the volume of potatoes fed from the bunker (2) towards the planting element (3):
   - a first volume sensor (7) measures the volume of potatoes just before the slide (13) in the bunker (2);
   - seen in the feed direction, a second volume sensor (6) measures the volume of potatoes behind the slide (13), in an intermediate buffer of potatoes where the cups (18) of the cup elevator (3) take out potatoes;
- several quantity sensors (8, 9, 10, 20) for recording a quantity parameter (17) of the amount of potatoes in a cup (18) of the cup elevator (3):
   - a first quantity sensor (8, 20) records in the ascending part of the cup elevator (3) how much potatoes are present on a cup (18), this seen from the front of the cup (18). A potato normally lies on the back or in the cup (18);
   - a second quantity sensor (9) records on the top part of the cup elevator (3) where the cups (18) tilt between the ascending part and the descending part of the cup elevator (3) how much potatoes are present in a cup (18);
   - a third quantity sensor (10) records in the descending part of the cup elevator (3) how much potatoes are present on a cup (18), this seen from the back of the cup.

In the first illustrated embodiment, the volume sensors (6, 7) are cameras. These cameras (6, 7) can form an image of the potatoes at this location and, based on this image, an estimate can be made of the volume present. Multiple cameras could be provided to form a 3D image to determine the volume more accurately.

In the second embodiment, these volume sensors (6, 7) are height sensors. The recorded height of the potatoes at this location can be used as a measure of the volume of potatoes present.

Alternatively a laser scanner could be used as such a volume sensor.

In the illustrated embodiments, transmitters and receivers are provided as quantity sensors (8, 9, 10). In addition, a camera is provided as an alternative first quantity sensor (20). It is also possible to provide cameras as alternative second and third quantity sensor. Many embodiments of quantity sensors are known from existing planters where such sensors are present to detect misses.

It will normally not be necessary to provide all illustrated sensors (6, 7, 8, 9, 10, 20) in a single planter (1). In simple embodiments, only one of said sensors (6, 7, 8, 9, 10, 20) can be provided.

In a preferred embodiment, a planter (1) is provided with at least a said second volume sensor (6) and a said third quantity sensor (10). This third quantity sensor (10) could be replaced by a said first quantity sensor (8, 20) or a said second quantity sensor (9). A said first volume sensor (7) could in addition be provided, in order to monitor the amount of potatoes left in the bunker (2), in order to determine the cause of occurring misses.

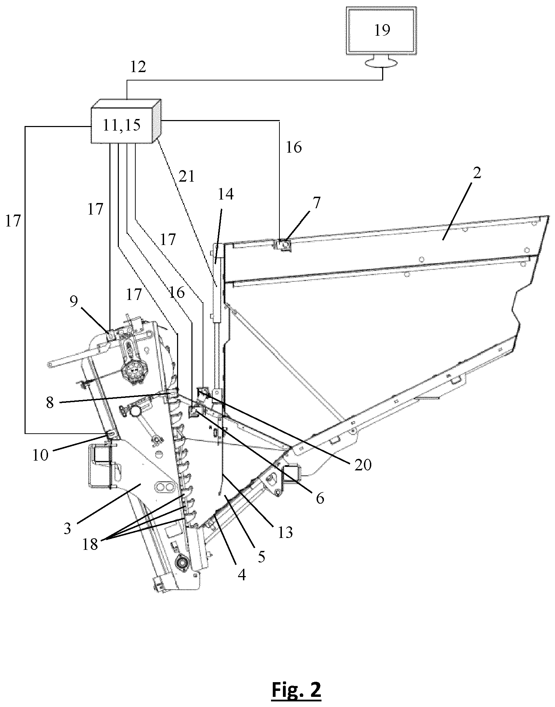

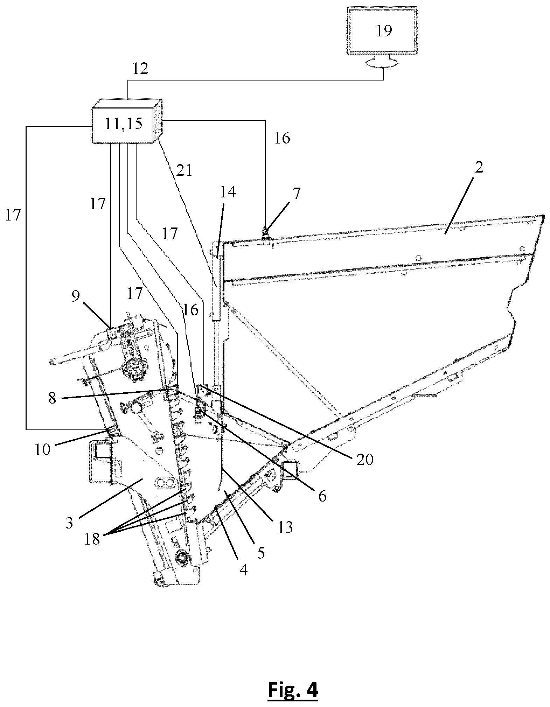

As illustrated in figures 2 and 4, said sensors (6, 7, 8, 9, 10, 20) each record a corresponding feed parameter (16, 17), which is sent to an evaluation device (11) of the planter (1). Based on a data set of at least one such recorded feed parameter (16, 17), the evaluation device (11) generates a feed opening adjusting signal (12), which is shown on a monitor (19) to the driver of the planter (1). This driver can then decide to let control unit (15) control a hydraulic cylinder (14) as actuator for adjusting the position of the corresponding slide (13). The control unit (15) then sends a corresponding control signal (21) to the hydraulic cylinder (14) in order to set the slide (13) in a desired position for adjusting the feed opening (5) accordingly. In the first illustrated embodiment, two such hydraulic cylinder (14) are provided, one hydraulic cylinder (14) per two slides (13). In the second illustrated embodiment, each slide (13) is actuable by its own hydraulic cylinder (14) as actuator.

In alternative embodiments, other types of actuators (14), such as e.g. an electric or pneumatic cylinder or an electric motor could be provided for adjusting the position of one or more delimiters (13) delimiting the feed opening (5).

The control unit (15) may additionally or alternatively be provided to receive feed opening adjusting signal (12) directly from the evaluation device (11), and to use it to control the hydraulic cylinder (14) directly with a corresponding control signal (21), so that the planter (1) is self-regulating in this way.

With the help of one of more of the mentioned sensors (6, 7, 8, 9, 10, 20). Different types of actions can be taken. The evaluation device (11) can e.g. be programmed to assist with one or more of the following actions:
- when the evaluation device (11) detects that the volume of potatoes recorded by the second volume sensor (6) increases and that the potatoes become too accumulated behind the feed opening (5), it generates a feed opening adjusting signal (12) for decreasing the feed opening (5) and/or feed device (4) can be set at a lower angle (less gravity) and/or if the feed device (4) is a conveyor it can be set slower and/or if it is a moving floor, the evaluation device (11) can generate a vibration setting parameter to set the moving floor to vibrate less (vibrate distance or speed). The reverse is true when too few potatoes are measured behind the feed opening (5);
- when the evaluation device (11) detects that the volume of potatoes recorded by the first volume sensor (7) increases before the feed opening (5) and that the potatoes become too accumulated, it generates a feed opening adjusting signal (12) for increasing the feed opening (5) and/or feed device (4) can be set at a higher angle (more gravity), or if the feed device (4) is a conveyor it can be set faster, or if it is a moving floor, the evaluation device (11) can generate a vibration setting parameter to set the moving floor to vibrate more (vibrate distance or speed). The reverse is true when too few potatoes are measured before the feed opening (5), except when the evaluation device (11) detects that the volume of potatoes recorded by the first volume sensor (7) decreases below a certain threshold, indicating that the bunker (2) is (almost) empty. In that last case no further adjustment of the feed opening (5) is required, but instead a signal can be generated by the evaluation device, indicating that the bunker (2) is to be filled;
- when the evaluation device (11) detects that the amount of potatoes recorded by quantity sensor (10) (or (9) or (8) or (20)) indicates more than 1 double in a short time, it generates a feed opening adjusting signal (12) for decreasing the feed opening (5) and/or for setting feed device (4) less slanted (less gravity), and/or if the feed device (4) is a conveyor belt, it can be set slower and/or if the feed device (4) the evaluation device can generate a vibration setting parameter to set the moving floor to vibrate less (distance or speed vibrate). The reverse is true when a few misses in a short time are measured;
- when the evaluation device (11) detects that the volume of potatoes recorded by the second volume sensor (6) measures enough volume but that the amount of potatoes recorded by quantity sensor (10) (or (9) or (8) or (20)) still indicates a lot of misses in a short time, the evaluation device (11) can generate an alarm to check whether there is a congestion after the feed opening (5). If this is the case this can then be solved manually. Alternatively or additionally, the evaluation device (11) can generate a feed opening adjusting signal to increase and decrease the feed opening (5) repeatedly to try to remove the blockage and/or to set a feed device (4) repeatedly at a higher and lower angle and/or to move a conveyor belt (4) repeatedly faster and slower;
- when the evaluation device (11) detects that the volume of potatoes recorded by the second volume sensor (6) is too little (below a pre-set threshold) and the feed opening (5) is large and that the volume of potatoes recorded by the first volume sensor (7) indicates that there are still enough potatoes in the bunker (2) (the volume in the bunker (2) is above a pre-set threshold) the evaluation device (11) can generate an alarm to check whether there is a blockage in front of the feed opening (5). Alternatively or additionally, the evaluation device (11) can generate a vibration setting parameter to set a moving floor to vibrate a little more and/or a feed opening adjusting parameter to increase and decrease the feed opening (5) repeatedly and/or to set a feed device (4) repeatedly at a higher and lower angle and/or to move a conveyor belt (4) repeatedly faster and slower.

The planter (1) can additionally comprise a vibration device and the evaluation device can additionally be provided for generating a vibration setting parameter, based on the data set of the feed parameter (16, 17) for adjusting the vibration device.

In a first embodiment, this vibration device can be provided for moving a moving floor of the bunker (2), e.g. faster forwards or backwards and possibly over a larger distance forwards or backwards or vibrating the moving floor faster upwards and downwards and possibly over a larger distance upwards or downwards. With this vibration device e.g. a blocking of potatoes before the slide (13) can be remedied.

In a second embodiment, this vibration device can be provided for vibrating the cups (18) in the ascending part.

An existing planter (1) can be converted into a planter (1) according to the invention by providing an evaluation device (11), adjusted for generating a feed opening adjusting signal (12) based on a data set of the recorded feed parameter (16, 17), for adjusting the feed opening (5) for adjusting the quantity of seedlings allowed to pass. Such planter (1) can additionally be provided with one or more said sensors (6, 7, 8, 9, 10, 20).

If such planter (1) e.g. already is provided with a manually adjustable slide (13) for adjusting the feed opening (5), then an actuator (14), such as e.g. a said hydraulic cylinder (14) can be provided for adjusting the position of this slide (13) and a control unit (15), adapted to control the actuator (14) based on the feed opening adjusting signal (12), for adjusting the feed opening (5).

It is also possible to provide such planter (1) with alternative adjustable delimiters (13) for delimiting the feed opening (5).

## Claims

1. Planter (1), for planting seedlings, such as potatoes or other tuberous or bulbous plants, comprising:
- a bunker (2) for keeping seedlings to be planted;
- a planting element (3) for planting these seedlings;
- one or more feed devices (4) for feeding the seedlings from the bunker (2) to the planting element (3);
- a feed opening (5) allowing a quantity of seedlings to pass from the bunker (2) towards the planting element (3);
- at least one feed sensor (6, 7, 8, 9, 10, 20) for recording at least one feed parameter (16, 17) of the feed of seedlings; and
- an evaluation device (11), adjusted for generating a feed opening adjusting signal (12) based on a data set of the recorded feed parameter (16, 17), for adjusting the feed opening (5) for adjusting the quantity of seedlings allowed to pass;
**characterized in that** the planter (1) comprises one or more delimiters (13), delimiting the feed opening (5) and an actuator (14) for adjusting the position of the one or more delimiters (13) based on the feed opening adjusting signal (16, 17), for adjusting the feed opening (5).

2. Planter (1) according to claim 1, **characterised in that** the planter (1) comprises a control unit (15), adapted to control the actuator (14) based on the feed opening adjusting signal (12).

3. Planter (1) according to one of the preceding claims, **characterised in that** the planter (1) is a cup planter (1).

4. Planter (1) according claim 3, **characterised in that** the feed sensor (6, 7, 8, 9, 10, 20) is a quantity sensor (8, 9, 10, 20) for recording a quantity parameter (17) of the amount of seedlings in a cup (18) of the cup planter (1) as said feed parameter (17).

5. Planter (1) according to one of the preceding claims, **characterised in that** the feed sensor (6, 7, 8, 9, 10, 20) is a volume sensor (6, 7), for measuring a volume parameter (16) of the volume of seedlings fed from the bunker (2) towards the planting element (3) as said feed parameter (17).

6. Planter (1) according to one of the preceding claims, **characterised in that**, seen in a feeding direction wherein seedlings are fed from the bunker (2) to the planting element (3), the feed sensor (6, 8, 9, 10, 20) is positioned behind the feed opening (5).

7. Planter (1) according to one of the preceding claims, **characterised in that**, seen in the feeding direction, the feed sensor (6, 7, 20) is positioned before the planting element (3).

8. Planter (1) according to one of the preceding claims, **characterised in that** the planter (1) comprises a vibration device and that the evaluation device (11) is adjusted for generating a vibration setting parameter, based on the data set of the feed parameter (16, 17) for adjusting the vibration device.

9. Method for controlling the operation of a planter (1), wherein seedlings are fed from a bunker (2) to a planting element (3), thereby passing a feed opening (5), wherein at least one feed parameter (16, 17) of the feed of seedlings is recorded by at least one feed sensor (6, 7, 8, 9, 10, 20), an evaluation device (11) generates a feed opening adjusting signal (12) based on a data set of the recorded feed parameter (16, 17), for adjusting the feed opening (5) for adjusting the quantity of seedlings allowed to pass from the bunker (2) towards the planting element (3) **characterised in that** the planter (1) is a planter according to any of the preceding claims.

## Patentansprüche

1. Pflanzmaschine (1) zum Pflanzen von Setzlingen, wie beispielsweise Kartoffeln oder anderen Knollen- oder Zwiebelgewächsen, die Folgendes umfasst:
- einen Bunker (2) zum Aufbewahren von Setzlingen, die gepflanzt werden sollen;
- ein Pflanzelement (3) zum Pflanzen dieser Setzlinge;
- eine oder mehrere Zuführvorrichtungen (4) zum Zuführen der Setzlinge von dem Bunker (2) zu dem Pflanzelement (3);
- eine Zuführöffnung (5), die erlaubt, dass sich eine Menge von Setzlingen von dem Bunker (2) zu dem Pflanzelement (3) bewegt;
- mindestens einen Zuführsensor (6, 7, 8, 9, 10, 20) zum Erfassen mindestens eines Zuführparameters (16, 17) der Zufuhr von Setzlingen; und
- eine Auswertevorrichtung (11), die eingestellt ist, basierend auf einem Datensatz der erfassten Zuführparameter (16, 17) ein Signal (12) zur Einstellung der Zuführöffnung zu erzeugen, um die Zuführöffnung (5) zum Einstellen der Menge von Setzlingen, die sich hindurch bewegen dürfen, einzustellen;
**dadurch gekennzeichnet, dass** die Pflanzmaschine (1) eine oder mehrere Begrenzungsvorrichtungen (13), die die Zuführöffnung (5) begrenzen, und einen Aktuator (14) zum Einstellen der Position der einen oder der mehreren Begrenzungsvorrichtungen (13) basierend auf dem Signal (16, 17) zur Einstellung der Zuführöffnung, zum Einstellen der Zuführöffnung (5) umfasst.

2. Pflanzmaschine (1) nach Anspruch 1, **dadurch gekennzeichnet, dass** die Pflanzmaschine (1) eine Steuereinheit (15) umfasst, die dafür ausgelegt ist, den Aktuator (14) basierend auf dem Signal (12) zur Einstellung der Zuführöffnung zu steuern.

3. Pflanzmaschine (1) nach einem der vorhergehenden Ansprüche, **dadurch gekennzeichnet, dass** die Pflanzmaschine (1) eine Becherlegemaschine (1) ist.

4. Pflanzmaschine (1) nach Anspruch 3, **dadurch gekennzeichnet, dass** der Zuführsensor (6, 7, 8, 9, 10, 20) ein Mengensensor (8, 9, 10, 20) zum Erfassen eines Mengenparameters (17) der Zahl von Setzlingen in einem Becher (18) der Becherlegemaschine (1) als den Zuführparameter (17) ist.

5. Pflanzmaschine (1) nach einem der vorhergehenden Ansprüche, **dadurch gekennzeichnet, dass** der Zuführsensor (6, 7, 8, 9, 10, 20) ein Volumensensor (6, 7) ist, um als den Zuführparameter (17) einen Volumenparameter (16) des Volumens der Setzlinge, die von dem Bunker (2) zu dem Pflanzelement (3) zugeführt werden, zu messen.

6. Pflanzmaschine (1) nach einem der vorhergehenden Ansprüche, **dadurch gekennzeichnet, dass** dann, wenn die Setzlinge von dem Bunker (2) zu dem Pflanzelement (3) zugeführt werden, der Zuführsensor (6, 8, 9, 10, 20) in Zuführrichtung hinter der Zuführöffnung (5) positioniert ist.

7. Pflanzmaschine (1) nach einem der vorhergehenden Ansprüche, **dadurch gekennzeichnet, dass** der Zuführsensor (6, 7, 20) in Zuführrichtung vor dem Pflanzelement (3) positioniert ist.

8. Pflanzmaschine (1) nach einem der vorhergehenden Ansprüche, **dadurch gekennzeichnet, dass** die Pflanzmaschine (1) eine Vibrationsvorrichtung umfasst und dass die Auswertevorrichtung (11) basierend auf dem Datensatz des Zuführparameters (16, 17) zur Einstellung der Vibrationsvorrichtung eingestellt ist, einen Vibrationseinstellparameter zu erzeugen.

9. Verfahren zur Steuerung des Betriebs einer Pflanzmaschine (1), wobei Setzlinge von einem Bunker (2) zu einem Pflanzelement (3) zugeführt werden, wobei sie sich durch eine Zuführöffnung (5) bewegen, wobei mindestens ein Zuführparameter (16, 17) der Zufuhr von Setzlingen durch mindestens einen Zuführsensor (6, 7, 8, 9, 10, 20) erfasst werden und eine Auswertevorrichtung (11) basierend auf einem Datensatz der erfassten Zuführparameter (16, 17) ein Signal (12) zur Einstellung der Zuführöffnung erzeugt, um die Zuführöffnung (5) zum Einstellen der Menge von Setzlingen, die sich von dem Bunker (2) zu dem Pflanzelement (3) bewegen dürfen, einzustellen, **dadurch gekennzeichnet, dass** die Pflanzmaschine (1) eine Pflanzmaschine nach einem der vorhergehenden Ansprüche ist.

## Revendications

1. Planteuse (1) destinée à planter des semis, tels que des patates ou autres plantes à tubercules ou à bulbes, comportant :
- une trémie (2) servant à garder des semis à planter ;
- un élément (3) de plantation servant à planter ces semis ;
- un ou plusieurs dispositifs (4) d'alimentation servant à amener les semis de la trémie (2) à l'élément (3) de plantation ;
- une ouverture (5) d'alimentation permettant à une quantité de semis de passer de la trémie (2) vers l'élément (3) de plantation ;
- au moins un capteur (6, 7, 8, 9, 10, 20) d'alimentation servant à enregistrer au moins un paramètre (16, 17) d'alimentation de l'alimentation en semis ; et
- un dispositif (11) d'évaluation, réglé pour générer un signal (12) de réglage d'ouverture d'alimentation d'après un ensemble de données du paramètre (16, 17) d'alimentation enregistré, pour régler l'ouverture (5) d'alimentation afin de régler la quantité de semis autorisée à passer ;
**caractérisée en ce que** la planteuse (1) comporte un ou plusieurs délimiteurs (13) délimitant l'ouverture (5) d'alimentation et un actionneur (14) servant à régler la position du ou des délimiteurs (13) d'après le signal de réglage d'ouverture d'alimentation (16, 17), pour régler l'ouverture (5) d'alimentation.

2. Planteuse (1) selon la revendication 1, **caractérisée en ce que** la planteuse (1) comporte une unité (15) de commande, prévue pour commander l'actionneur (14) d'après le signal (12) de réglage d'ouverture d'alimentation.

3. Planteuse (1) selon l'une quelconque des revendications précédentes, **caractérisée en ce que** la planteuse (1) est une planteuse (1) à godets.

4. Planteuse (1) selon la revendication 3, **caractérisée en ce que** le capteur (6, 7, 8, 9, 10, 20) d'alimentation est un capteur (8, 9, 10, 20) de quantité servant à enregistrer un paramètre (17) de quantité de la quantité de semis dans un godet (18) de la planteuse (1) à godets en tant que ledit paramètre (17) d'alimentation.

5. Planteuse (1) selon l'une quelconque des revendications précédentes, **caractérisée en ce que** le capteur (6, 7, 8, 9, 10, 20) d'alimentation est un capteur (6, 7) de volume, servant à mesurer un paramètre (16) de volume du volume de semis amené de la trémie (2) vers l'élément (3) de plantation en tant que ledit paramètre (17) d'alimentation.

6. Planteuse (1) selon l'une quelconque des revendications précédentes, **caractérisée en ce que**, vu dans une direction d'alimentation dans laquelle des semis sont amenés de la trémie (2) à l'élément (3) de plantation, le capteur (6, 8, 9, 10, 20) d'alimentation est positionné derrière l'ouverture (5) d'alimentation.

7. Planteuse (1) selon l'une quelconque des revendications précédentes, **caractérisée en ce que**, vu dans la direction d'alimentation, le capteur (6, 7, 20) d'alimentation est positionné devant l'élément (3) de plantation.

8. Planteuse (1) selon l'une quelconque des revendications précédentes, **caractérisée en ce que** la planteuse (1) comporte un dispositif de vibrations et **en ce que** le dispositif (11) d'évaluation est réglé pour générer un paramètre de réglage de vibrations, d'après l'ensemble de données du paramètre (16, 17) d'alimentation pour régler le dispositif de vibrations.

9. Procédé de commande du fonctionnement d'une planteuse (1), dans laquelle des semis sont amenés d'une trémie (2) à un élément (3) de plantation, franchissant ainsi une ouverture (5) d'alimentation, au moins un paramètre (16, 17) d'alimentation de l'alimentation en semis étant enregistré par au moins un capteur (6, 7, 8, 9, 10, 20) d'alimentation, un dispositif (11) d'évaluation générant un signal (12) de réglage d'ouverture d'alimentation d'après un ensemble de données du paramètre (16, 17) d'alimentation enregistré, pour régler l'ouverture (5) d'alimentation afin de régler la quantité de semis autorisée à passer de la trémie (2) vers l'élément (3) de plantation, **caractérisé en ce que** la planteuse (1) est une planteuse selon l'une quelconque des revendications précédentes.
